# EUROPÄISCHE PATENTSCHRIFT

(11) **EP 1 253 275 B1**
(45) Veröffentlichungstag und Bekanntmachung des Hinweises auf die Patenterteilung: **02.03.2005**
(21) Anmeldenummer: 01110233.2
(22) Anmeldetag: 25.04.2001
(51) Int. Cl.: E05F 15/16, F16F 15/126, E05F 11/50

(54) **Getriebe-Antriebseinheit, insbesondere Fensterheber- bzw. Schiebedachantrieb für ein Kraftfahrzeug, sowie Verfahren zu deren Herstellung**
Geared drive unit, in particular vehicle window-winder respectively sliding roof for a vehicle, and its manufacturing
Unité d'entraînement avec réducteur, notamment pour lève-vitre respectivement toit ouvrant d'un véhicule, et procédé de fabrication

(43) Veröffentlichungstag der Anmeldung: 30.10.2002
(73) Patentinhaber: SIEMENS AKTIENGESELLSCHAFT, 80333 München (DE)
(72) Erfinder: Eisert, Horst, 97271 Kleinrinderfeld (DE)

(56) Entgegenhaltungen:
- EP-A- 0 549 817

## Beschreibung

Die Erfindung bezieht sich auf eine Getriebe-Antriebseinheit gemäß Patentanspruch 1 bzw. auf ein Verfahren zu deren Herstellung gemäß Patentanspruch 8; eine Getriebe-Antriebseinheit mit den ersten drei Teilmerkmalen des Anspruchs 1 ist z.B. aus der EP 0 549 817 B1 oder der DE 34 29 249 A1 bekannt.

Zur Vermeidung von Getriebeschäden, z.B. beim Anlaufen einer motorisch angetriebenen Fensterseitenscheibe in einem Kraftfahrzeug gegen einen Anschlag bei Erreichen der oberen oder unteren Endlage, sind zwischen den unabhängigen, in der Regel konzentrisch verdrehbar zueinander angeordneten Bauteilen des Getrieberades einerseits und des Mitnehmers andererseits in dämpfungstechnisch besonders vorteilhafter Weise Gummipuffer als Anschlagdämpfer bei der gegenseitigen Drehmitnahme derart vorgesehen, dass sie unter elastischer Verformung der Gummipuffer bei einem harten Anschlag relativ gegeneinander um einen kleinen Umfangswinkel verdrehbar sind. Die Gummipuffer sind als getrennte Bauteile auf axial frei abstehende Zapfen der Mitnehmerscheibe aufgesteckt und greifen zur gedämpften Drehmitnahme betriebsmäßig in korrespondierende Taschen des Getrieberades; alternativ können in fertigungstechnisch besonders vorteilhafter Weise Getrieberad und Mitnehmerscheibe als einstückiges Bauteil mit sie betriebsmäßig verbindenden Speichen aus Kunststoff gespritzt sein, wobei die Speichen im Sinne einer Anschlagdämpfung durch tangentiale Verformbarkeit ausgebildet sind und wiederum eine relative Verdrehbarkeit zwischen Getrieberad und Mitnehmerscheibe um einen kleinen Umfangswinkel erlauben.

Gemäß Aufgabe vorliegender Erfindung sollen trotz vereinfachter Fertigungs- und Montagetechnik die dämpfungstechnischen Vorteile einer Elastomer-Dämpfung zwischen Getrieberad einerseits und Mitnehmerscheibe andererseits voll ausnutzbar sein.

Die Lösung dieser Aufgabe gelingt erfindungsgemäß durch eine Getriebe-Antriebseinheit gemäß Patentanspruch 1 und ein Verfahren zu deren Herstellung gemäß Patentanspruch 8; vorteilhafte Ausgestaltungen der erfindungsgemäßen Getriebe-Antriebseinheit sind jeweils Gegenstand der Ansprüche 2 bis 7.

Erfindungsgemäß ist mit nur zwei gieß- bzw. spritzgießtechnisch besonders einfachen Fertigungsvorgängen eine komplette, sowohl das Getrieberad und den Mitnehmer als auch das Elastomer-Dämpfer-Zwischenteil umfassende Bauteileinheit erstellbar und die gegenseitige gießtechnisch zunächst vorteilhafte Positionierungsausrichtung und Positionsfixierung zwischen dem Getrieberad einerseits und dem Mitnehmer andererseits mit Hilfe der Fixierungsstege vor der Inbetriebnahme durch eine einfache gegenseitige Verdrehung, z.B. bei einem Prüflauf, aufhebbar und dadurch die Elastomer-Anschlagdämpfung betriebstüchtig; durch das Angießen bzw. Zwischengießen des Elastomer-Dämpfer-Zwischenteils zwischen Getrieberad und Mitnehmer ist außerdem vorteilhaft - im Vergleich zum bekannten Aufstecken bzw. Einstecken von gesonderten Dämpferkappen - auch bei längeren Betriebseinsätzen und Alterung des Elastomers eine volle Anschlagdämpfung gewährleistet.

Die Erfindung sowie weitere vorteilhafte Ausgestaltungen gemäß Merkmalen der Unteransprüche werden im folgenden anhand schematischer Zeichnungen näher erläutert; darin zeigen:
- FIG 1,2: in axial stirnseitiger Vorder- bzw. Rückansicht eine Bauteileinheit aus Getrieberad, damit über Fixierungsstege fixierend und positionierend verbundenem Mitnehmer sowie zwischen - bzw. angegossenem Dämpfer-Zwischenteil;
- FIG 3: die Bauteileinheit gemäß FIG 1 bzw. 2 im Schnittverlauf III-III;
- FIG 4: im vergrößertem Detail-Ausschnitt IV aus FIG 1 eine noch nicht aufgelöste Sollbruchstelle in der Fixierungsverbindung zwischen Getrieberad und Mitnehmer;
- FIG 5: in vergrößertem Detail-Ausschnitt V aus FIG 3 die noch nicht aufgelöste Sollbruchstelle in der Fixierungsverbindung zwischen Getrieberad und Mitnehmer;
- FIG 6: im Axialschnitt einen bekannten motorischen Fensterheber-Antrieb mit einer einstückig aus Kunststoff gefertigten Bauteileinheit aus Getrieberad, Mitnehmer und zwischenliegenden tangential elastischen Speichen;
- FIG 7: den Antrieb gemäß FIG 6 im Schnittverlauf VII-VII;
- FIG 8: einen Antrieb gemäß FIG 6 jedoch mit einem dreiteiligen Zusammenbau mit Kunststoff-Getrieberad, Kunststoff-Mitnehmer und zwischenliegendem Elastomer-Dämpfer-Zwischenteil als jeweilige Einzelteile.

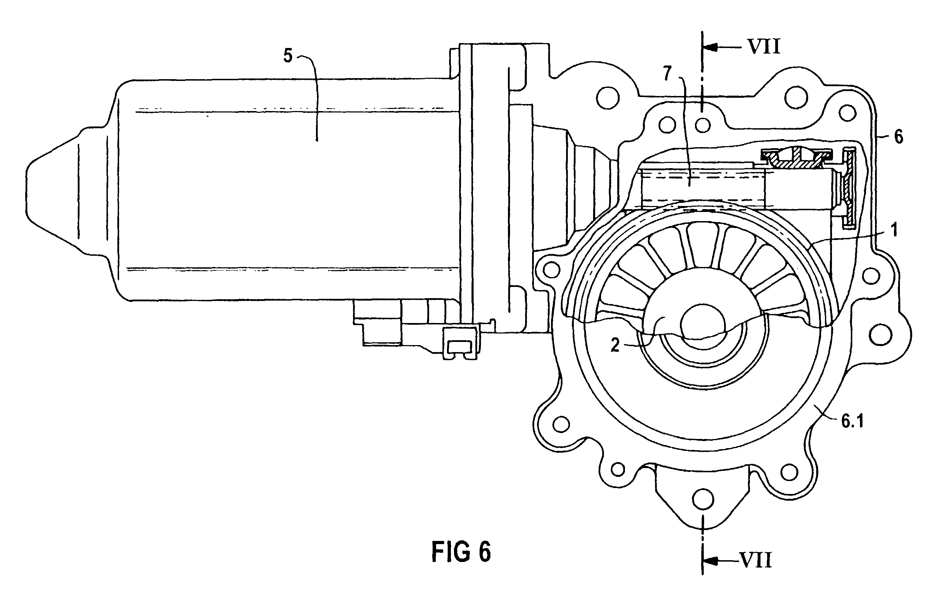

FIG 6 zeigt in einem axialen Längsschnitt den Prinzipaufbau eines z.B. aus der EP 0 549 817 B1 bekannten elektromotorischen Kraftfahrzeug-Stellantriebes, der z.B. für einen Fensterheberantrieb bzw. einen Schiebedachantrieb in einem Kraftfahrzeug einsetzbar ist. An die rechte Stirnseite des nur mit seinem Motorgehäuse 5 schematisch angedeuteten Kommutatormotors ist eine Getriebegehäuse 6 angeflanscht, in das die Rotorwelle des Kommutatormotors als Schneckenwelle 7 hineinragt und mit einem in dem Getriebegehäuse 6 drehbar gelagerten Getrieberad 1 kämmt.

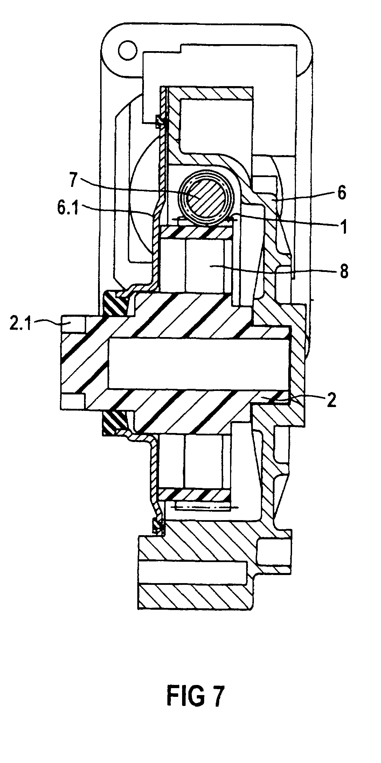

Wie insbesondere aus der Zusammenschau mit der Schnittdarstellung gemäß FIG 7 ersichtlich, ist der radial äußere Getriebekranz des Getrieberades 1 über federstegartige Speichen 8 als einstückiges Spritzgußteil mit einem Mitnehmer 2 ausgebildet, der mit einem rechten ersten Lagerbereich direkt in einer korrespondierenden Lageraufnahme des Getriebegehäuses 6 und mit einem linken zweiten Lagerbereich direkt in einer korrespondierenden Lageraufnahme des Getriebegehäusedeckels 6.1 drehbar gelagert ist und durch eine Mittelöffnung des Getriebegehäusedeckels mit einem Ende herausragt, das ein Ritzel 2.1 als äußeres Abtriebselement zur Ankopplung einer Betätigung für die Bewegung eines Kraftfahrzeugfensters bzw. eines Kraftfahrzeugschiebedaches aufnimmt. Ebenso wie die federstegartigen Speichen 8 ist auch das Ritzel 2.1 einstückiger Bestandteil des Mitnehmers 2, der zweckmäßigerweise aus einem gute Lagerfunktionen gewährleistenden Material, insbesondere aus einem entsprechenden Kunststoff, oder einem, gegebenenfalls ölgetränkten, Sintermaterial besteht.

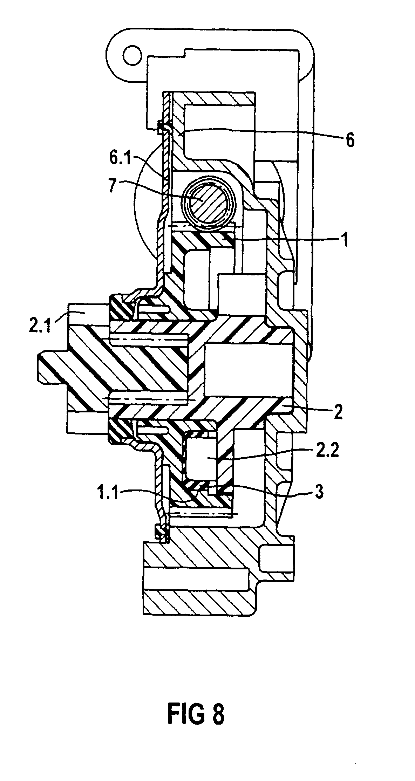

FIG 8 zeigt einen über ein gesondertes Dämpfer-Zwischenteil 3, insbesondere ein Elastomer-Dämpfer-Zwischenteil, in Drehmitnahme mit dem Getrieberad 1 stehenden getrennten Mitnehmer 2. Dazu greifen axial vorstehende Mitnehmernocken 2.2 des Mitnehmers 2 in korrespondierende, über den Umfang des Getrieberades 1 vorgesehene Mitnahmetaschen 1.1, wobei zwischen den Mitnehmernocken 2.2 einerseits und den Mitnahmetaschen 1.1 andererseits ein Dämpfer-Zwischenteil 3, insbesondere in Form einer Elastomerkappe, zwischengelegt, ist. Der Mitnehmer 2 ist wiederum mit seinem rechten ersten Lagerbereich in einer korrespondierenden Lageraufnahme des Getriebegehäuses 6 unmittelbar gelagert und mit seinem linken zweiten Lagerbereich mittelbar über eine an das Getrieberad 1 axial angeformte Lagerhülse in einer zweiten Lageraufnahme des Getriebegehäusedeckels 6.1 drehbar gelagert. Das als Abtriebselement vorgesehene Ritzel 2.1 ist in diesem Fall als gesondertes Element in formschlüssiger Drehmitnahme zum Mitnehmer 2 von der linken Seite her in eine Aufnahmeöffnung des Mitnehmers 2 eingesteckt.

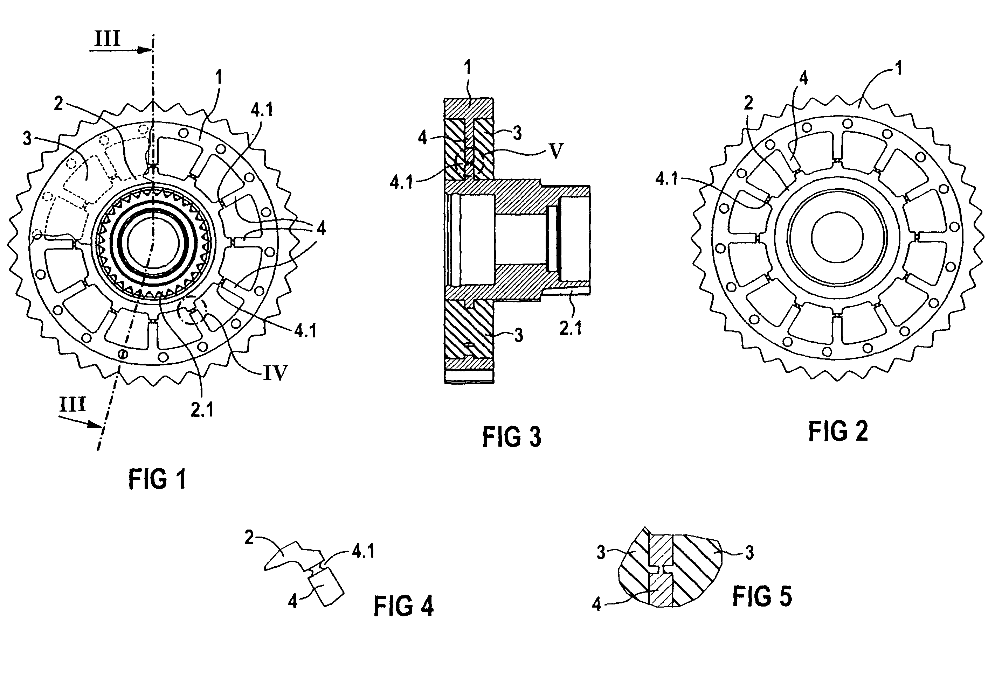

Die erfindungsgemäße Getriebe-Antriebseinheit wird, ausgehend von den bekannten Lösungen gemäß FIG 6-8, anhand der Figuren 1-5 näher erläutert.

FIG 1-3 zeigen in axialer stirnseitiger Vorderansicht, in axial stirnseitiger Rückansicht und im Schnitt gemäß Schnittverlauf III-III jeweils eine Bauteileinheit umfassend ein Getrieberad 1, ein damit über Fixierungsstege 4 während der Fertigung verbindbaren Mitnehmer 2 mit einem Ritzel 2.1 sowie ein betriebsmäßig als anschlagdämpfende Drehmitnahme zwischenliegendes Dämpfer-Zwischenteil 3.

Das Getrieberad 1 sowie der Mitnehmer 2 sind in einer, hier nicht explizit dargestellten, Gieß- bzw. Spritzgußform zweckmäßigerweise in einem Arbeitsgang, insbesondere aus Kunststoff, gleichzeitig mit die beiden zuvor genannten Bauteile verbindenden Fixierungsstegen 4 gegossen; die derart einfach fertigbare und in ihrer gegenseitigen Positionierung der Einzelteile fixierbare Bauteileinheit wird anschließend mit dem Dämpfer-Zwischenteil 3, insbesondere einem Elastomer-Dämpfer-Zwischenteil, durch Angießen bzw. Anspritzen versehen, wobei auch Zwischenräume, z.B. zwischen den Fixierungsstegen, mitausgegossen bzw. mitausgespritzt sind.

Die Fixierungsstege 4 sind, insbesondere durch Einbringung von Sollbruchstellen 4.1, derart ausgebildet, dass sie durch einfache Bewegung zwischen dem Getrieberad 1 und dem Mitnehmer 2, insbesondere bei tangentialer Tordierung um einen betriebsmäßigen Anschlagdämpfer-Verdrehwinkel, als Fixierungsverbindung zwischen Getrieberad und Mitnehmer lösbar, insbesondere wegbrechbar, sind. Dies erfolgt in fertigungstechnisch besonders vorteilhafter Weise zu Beginn eines an sich im Fertigungsablauf vorgesehenen Prüflaufs der Getriebe-Antriebseinheit durch einen entsprechenden Anlauf gegen einen harten Anschlag, z.B. eine End-Anlage in einer Vollschließ- bzw. Vollöffnungsstellung.

Zweckmäßigerweise sind die Fixierungsstege 4 derart in das Dämpferzwischenteil eingebettet, dass zumindest ein Teil der Anschlagkräfte von dem Getrieberad bzw. dem Mitnehmer über die Verbindungsstege 4 in das Dämpfer-Zwischenteil 3 betriebsmäßig einführbar ist.

## Patentansprüche

1. Getriebe-Antriebseinheit, insbesondere Fensterheber- bzw. Schiebedachantrieb für ein Kraftfahrzeug
- mit einem antriebsseitigen Getrieberad (1), insbesondere einem Schneckenrad,
- mit einem abtriebsseitigen Mitnehmer (2),
- mit einer anschlagelastischen Drehmitnahme zwischen dem Getrieberad (1) einerseits und dem Mitnehmer (2) andererseits über ein elastisches Dämpfer-Zwischenteil (3), insbesondere ein Elastomer-Dämpfer-Zwischenteil,
- mit im Sinne eines einstückigen Gieß- bzw. Spritzgußteils das Schneckenrad (1) mit dem Mitnehmer (2) gegenseitig verbindenden Fixierungsstegen (4), die nach anschließendem Verbindungs-Angießen bzw. Verbindungs-Anformen des Dämpfer-Zwischenteils (3) an das Getrieberad (1) und den Mitnehmer (2) als deren gegenseitige Fixierungs-Verbindung durch ein gegenseitiges, insbesondere tangentiales, Verdrehen, vorzugsweise bei einem Prüflauf, entkoppelbar sind.

2. Getriebe-Antriebseinheit nach Anspruch 1
- mit einer Anordnung bzw. Ausbildung der Fixierungsstege (4) in Form von Speichen zwischen dem Getrieberad (1) einerseits und dem Mitnehmer (2) andererseits.

3. Getriebe-Antriebseinheit nach Anspruch 1 und/oder 2
- mit einer Anordnung bzw. Ausbildung der Fixierungsstege (4) zwischen dem Schneckenrad (1) und dem Mitnehmer (2) im Sinne einer verbindungslösenden Wegbrechbarkeit durch eine gegenseitige, insbesondere tangentiale, Verdrehung zwischen dem Getrieberad (1) und dem über das Dämpferteil (3) verbundenen Mitnehmer (2).

4. Getriebe-Antriebseinheit nach zumindest einem der Ansprüche 1 bis 3
- mit zumindest jeweils einer für die Entkopplung zwischen dem Getrieberad (1) und dem Mitnehmer (2) vorgesehenen Sollbruchstelle (4.1) im Verlauf der Fixierungsstege (4).

5. Getriebe-Antriebseinheit nach zumindest einem der Ansprüche 1 bis 4
- mit einer Anordnung bzw. Ausbildung der Fixierungsstege (4) zwischen dem Getrieberad (1) und dem Mitnehmer (2) im Sinne einer unverlierbaren Aufnahme, insbesondere Einbettung, der verbindungsgelösten Fixierungsstege (4) in dem Dämpfer-Zwischenteil (3).

6. Getriebe-Antriebseinheit nach zumindest einem der Ansprüche 1 bis 5
- mit einer Ausbildung des Getrieberades (1) und des Mitnehmers (3) sowie der diese gegenseitig verbindenden Fixierungsstege (4) als Kunststoff-Teil, insbesondere als Kunststoff-Spritzgussteil.

7. Getriebe-Antriebseinheit nach zumindest einem der Ansprüche 1 bis 6
- mit einer Ausbildung des Dämpfer-Zwischenteils (3) als an das Getrieberad (1) und den Mitnehmer (2) unter Einschluss der Fixierungsstege (4) angespritztes Elastomerteil.

8. Verfahren zur Herstellung einer Getriebe-Antriebseinheit nach zumindest einem der vorhergehenden Ansprüche mit folgenden Verfahrensschritten:
- Gießen bzw. Spritzgießen des Getrieberades (1) und des Mitnehmers (2) mit samt den verbindenden Fixierungsstegen (4) als einstückige Bauteileinheit (1;2;4);
- Angießen bzw. Anspritzen des Dämpfer-Zwischenteils (3) an die Bauteileinheit (1;2;4);
- Lösen der Fixierungsstegverbindungen zwischen dem Getrieberad (1) einerseits und dem Mitnehmer (2) andererseits durch ein gegenseitiges, insbesondere tangentiales, Verdrehen, vorzugsweise bei einem Prüflauf der Getriebe-Antriebseinheit.

## Claims

1. Geared drive unit, in particular a window winder or sliding roof drive for a motor vehicle,
- having on the drive side a gearwheel (1), in particular a worm wheel,
- having on the output side a driver (2),
- having a rotational coupling, elastic in terms of its stopping characteristic, between the gearwheel (1) on the one hand and, on the other, the driver (2) via an elastic intermediate damper element (3), in particular an elastomer intermediate damper element and
- having fixing shafts (4) which link the worm wheel (1) to the driver (2) in the manner of a single-piece cast or, as the case may be, injection-moulded part and which, after the intermediate damper element (3) has in an ensuing process been cast or, as the case may be, moulded in a connecting manner onto the gearwheel (1) and the driver (2), can be decoupled as their mutual fixing link by a reciprocal, in particular tangential, twisting action, preferably during a test run.

2. Geared drive unit according to claim 1,
- having an arrangement or, as the case may be, embodiment of the fixing shafts (4) in the form of spokes between the gearwheel (1) on the one hand and the driver (2) on the other.

3. Geared drive unit according to claim 1 and/or 2,
- having an arrangement or, as the case may be, embodiment of the fixing shafts (4) between the worm wheel (1) and the driver (2) in the manner of being able to be broken off in a connection-releasing way by a reciprocal, in particular tangential, twisting action between the gearwheel (1) and the driver (2) connected via the damper element (3).

4. Geared drive unit according to at least one of claims 1 to 3,
- having in each case at least one predetermined breaking point (4.1) provided for decoupling between the gearwheel (1) and the driver (2) at a position along the fixing shafts (4).

5. Geared drive unit according to at least one of claims 1 to 4,
- having an arrangement or, as the case may be, embodiment of the fixing shafts (4) between the gearwheel (1) and the driver (2) in the manner of a captive securing, in particular embedding, of the released fixing shafts (4) in the intermediate damper element (3).

6. Geared drive unit according to at least one of claims 1 to 5,
- having an embodiment of the gearwheel (1) and of the damper element (3), and also of the fixing shafts (4) mutually linking these, in the form of a plastic part, in particular of a plastic injection-moulded part.

7. Geared drive unit according to at least one of claims 1 to 6,
- having an embodiment of the intermediate damper element (3) in the form of an elastomer part moulded onto the gearwheel (1) and onto the driver (2) in a way that encompasses the fixing shafts (4).

8. Method for producing a geared drive unit according to at least one of the preceding claims having the following method steps:
- casting or, as the case may be, injection-moulding the gearwheel (1) and the damper element (2), together with the linking fixing shafts (4), in the form of a single-piece component unit (1;2;4);
- casting or, as the case may be, injecting the intermediate damper element (3) onto the component unit (1;2;4);
- releasing the fixing-shaft links between the gearwheel (1) on the one hand and the driver (2) on the other by a reciprocal, in particular tangential, twisting action, preferably during a test run of the geared drive unit.

## Revendications

1. Unité d'engrenage et d'entraînement, en particulier entraînement de lève-vitre ou de toit ouvrant pour un véhicule automobile, comprenant
- une roue d'engrenage côté entrée (1), en particulier une roue à vis sans fin,
- un entraîneur côté sortie (2),
- un entraînement en rotation, élastique à l'arrivée en butée, entre la roue d'engrenage (1), d'une part, et l'entraîneur (2) d'autre part, réalisé au moyen d'un élément intermédiaire amortisseur élastique (3), en particulier d'un élément intermédiaire amortisseur en élastomère,
- des barrettes de blocage (4) qui assemblent mutuellement la roue à vis sans fin (1) à l'entraîneur (2) pour former un élément moulé ou moulé par injection d'une seule pièce, lesdites barrettes, après la coulée d'assemblage ou le moulage d'assemblage de l'élément intermédiaire amortisseur (3) sur la roue d'engrenage (1) et sur l'entraîneur, pouvant être désaccouplées dans leur qualité de liaison de blocage mutuel, par une rotation relative, en particulier tangentielle, de préférence exécutée lors d'une course épreuve.

2. Unité d'engrenage et d'entraînement selon la revendication 1, comprenant
- une disposition ou une configuration des barrettes de blocage (4) sous la forme de rayons entre la roue d'engrenage (1 ), d'une part, et l'entraîneur (2) d'autre part.

3. Unité d'engrenage et d'entraînement selon la revendication 1 et/ou 2 comprenant
- une disposition ou une configuration des barrettes de blocage (4) entre la roue à vis sans fin (1) et l'entraîneur (2) qui donne une possibilité de rupture de destruction de la liaison par une rotation relative, en particulier tangentielle, entre la roue d'engrenage (1) et l'entraîneur (2) qui y est relié par l'intermédiaire de l'élément amortisseur (3).

4. Unité d'engrenage et d'entraînement selon au moins une des revendications 1 à 3, comprenant
- au moins une zone d'amorce de rupture (4.1) prévue pour le désaccouplage entre la roue d'engrenage (1) et l'entraîneur (2) sur l'étendue des barrettes de blocage (4).

5. Unité d'engrenage et d'entraînement selon au moins une des revendications 1 à 4, comprenant
- une disposition et une configuration des barrettes de blocage (4) entre la roue d'engrenage (1) et l'entraîneur (2) qui donne une réception imperdable, en particulier un enrobage des barrettes de blocage (4) dont la liaison a été détruite, dans l'élément intermédiaire amortisseur (3).

6. Unité d'engrenage et d'entraînement selon au moins une des revendications 1 à 5, comprenant
- une constitution de la roue d'engrenage (1) et de l'entraîneur (3), ainsi que des barrettes de blocage (4) qui les assemblent l'un à l'autre en formant une pièce de matière plastique, en particulier une pièce de matière plastique moulée par injection.

7. Unité d'engrenage et d'entraînement selon au moins une des revendications 1 à 6, comprenant
- une constitution de l'élément intermédiaire amortisseur (3) sous la forme d'un élément en élastomère venu de moulage par injection sur la roue d'engrenage (1) et l'entraîneur (2) avec inclusion des barrettes de blocage (4).

8. Procédé de fabrication d'une unité d'engrenage et d'entraînement selon au moins une des revendications précédentes, comprenant les phases de procédé suivantes :
- moulage ou moulage par injection de la roue d'engrenage (1) et de l'entraîneur (2), avec les barrettes de blocage (4) qui les relie, sous la forme d'une unité préfabriquée en une seule pièce (1 ; 2 ; 4) ;
- moulage ou injection de l'élément intermédiaire amortisseur (3) sur l'unité préfabriquée (1 ; 2 ; 4) ;
- destruction des liaisons par barrettes de blocage entre la roue d'engrenage (1), d'une part, et l'entraîneur (2), d'autre part, par une rotation relative, en particulier tangentielle, exécutée de préférence lors d'une course d'épreuve de l'unité d'engrenage et d'entraînement.
